# EUROPÄISCHE PATENTANMELDUNG

(11) **EP 4 002 628 A1**
(43) Veröffentlichungstag der Anmeldung: **25.05.2022**
(21) Anmeldenummer: 21206272.3
(22) Anmeldetag: 03.11.2021
(51) Int. Cl.: H02J 3/00, H02J 3/24, H02J 13/00

(54) **VERFAHREN ZUR AUTOMATISIERTEN ERKENNUNG EINER SCHALTMATRIX VON AN EIN DREIPHASEN-VERTEILNETZ ANGESCHLOSSENEN ELEKTRISCHEN VERBRAUCHSMITTELN, INSBESONDERE VON LADEEINRICHTUNGEN FÜR ELEKTRISCHE ENERGIESPEICHER SOWIE LADEEINRICHTUNG**

(30) Priorität: 23.11.2020 DE 102020130863
(71) Anmelder: Innogy eMobility Solutions GmbH, 44139 Dortmund (DE)
(72) Erfinder: Skrbic, Srdan, 44265 Dortmund (DE)
(74) Vertreter: Gottschald Patentanwälte Partnerschaft mbB

(57) **Zusammenfassung**

Die Erfindung betrifft ein Verfahren zur automatisierten Erkennung einer Schaltmatrix von wenigstens zwei mehrpolig an ein Dreiphasen-Verteilnetz (4) angeschlossenen elektrischen Verbrauchsmitteln, insbesondere von an das Verteilnetz (4) angeschlossenen Ladeeinrichtungen (1, 2, 3) für elektrische Energiespeicher, wobei die Verbrauchsmittel jeweils eine Vielzahl von Phasenanschlüssen (AL1, AL2, AL3) aufweisen, die an jeweils eine Phase (L1, L2, L3) des Verteilnetzes (4) angeschlossen sind, wobei die Anschlussbelegung wenigstens eines ersten Verbrauchsmittels bekannt ist, wobei das Verfahren die Messung und/oder Überwachung eines zeitlichen Verlaufs und/oder einer Amplitude und/oder eines momentanen Wertes der Spannung an den Phasenanschlüssen wenigstens eines zweiten Verbrauchsmittels und/oder des ersten Verbrauchsmittels umfasst und die Anschlussbelegung an wenigstens dem zweiten Verbrauchsmittel durch Abgleich von Spannungsinformationen des ersten und des zweiten Verbrauchsmittels ermittelt wird. Die Erfindung betrifft weiterhin eine Ladeeinrichtung (1, 2, 3), die zur Durchführung des Verfahrens ausgebildet ist.

## Beschreibung

Die Erfindung betrifft ein Verfahren zur Erkennung einer Schaltmatrix von wenigstens zwei mehrpolig an ein Dreiphasen-Verteilnetz angeschlossenen elektrischen Verbrauchsmitteln, insbesondere von an das Dreiphasen-Verteilnetz angeschlossenen Ladeeinrichtungen für einen elektrischen Energiespeicher, wobei die Verbrauchsmittel jeweils eine Vielzahl von Phasenanschlüssen aufweisen, die an jeweils eine Phase des Verteilnetzes angeschlossen sind, wobei die Anschlussbelegung wenigstens eines ersten elektrischen Verbrauchsmittels bekannt ist.

Die Erfindung betrifft weiterhin eine Ladeeinrichtung als elektrisches Verbrauchsmittel, welche zur Durchführung des Verfahrens ausgebildet ist.

Dreiphasige Stromnetze werden häufig mit einphasigen Verbrauchern in Form von elektrischen Betriebsmitteln, elektrischen Speichern, Generatoren oder dergleichen unsymmetrisch belastet. Elektrische Verbrauchsmittel sind beispielsweise auch Ladeeinrichtungen für Elektrofahrzeuge, die teilweise einphasig oder auch zweiphasig mit hoher Leistung und mit hoher Gleichzeitigkeit betrieben werden. Die elektrischen Verbrauchsmittel sind in der Regel an ein bis drei Außenleitern gegen den Neutralleiter bzw. Nullleiter oder an mehreren Außenleitern ohne Neutralleiter angeschlossen. Die unsymmetrische Belastung des Verteilnetzes, welches in Europa häufig als Dreiphasen-Niederstromnetz mit drei Phasenleitern (400 V Phase zu Phase) und einem Nullleiter (230 V Phase zu Nullleiter) ausgebildet ist, ist grundsätzlich im Hinblick auf die Qualität der Versorgungsspannung an einem Netzanschlusspunkt nicht wünschenswert.

Dieses Problem ist bereits in der DE 10 2018 214 747 A1 beschrieben, welche eine Einrichtung vorschlägt, die einen Phasenwechsel eines Verbrauchers auf eine weniger belastete Phase ermöglicht bzw. die Phasen eines Verbrauchers den Phasen des Niederspannungsstromkreises derart zuordnet, dass die Phasenleiter möglichst gleichmäßig belastet werden. Nach der in der DE 10 2018 214 747 A1 beschriebenen Lehre wird der Phasenwechsel durch elektronische Schalteinheiten bewerkstelligt, die ein halbleiterbasiertes Schließen und Öffnen einer elektrischen Verbindung bewirken.

Aus der europäischen Patentanmeldung EP 3 549 814 A1 ist ein Verfahren zur Zuordnung einer Anschlussinformation zu einer zum Laden eines elektrischen Energiespeichers ausgebildeten Ladeeinrichtung bekannt. Bei dem aus der EP 3 549 814 A1 bekannten Verfahren wird durch eine Recheneinrichtung für jede Ladeeinrichtung einer Mehrzahl von Ladeeinrichtungen jeweils eine Anschlussinformation ermittelt, wobei jede Ladeeinrichtung wenigstens einen Phasenanschluss umfasst und die Anschlussinformationen für den wenigstens einen Phasenanschluss eine erlaubte Phasenzuordnung aus einer Menge von mehreren erlaubten Phasenzuordnungen angibt, wobei die Phasenzuordnungen eine Zuordnung jeweils einer Phase eines mehrphasigen Stromnetzes an wenigstens einen Phasenanschluss beschreiben und wobei die Anschlussinformationen durch die Recheneinrichtung derart ermittelt werden, dass für wenigstens ein Paar von Ladeeinrichtungen jeweils eine unterschiedliche Anschlussinformation ermittelt wird. Die jeweilige Anschlussinformation für die Ladeeinrichtungen wird durch die Recheneinrichtung bereitgestellt und kann beispielsweise mittels eines Mobilgerätes, welches über eine Kommunikationsverbindung mit der Recheneinrichtung verbunden ist, abgerufen werden. Hierzu ist ein Abruf über E-Mail, eine App und/oder über ein Webinterface vorgesehen. Dieser Abruf muss von einem Monteur vor oder während der Montage der Ladeeinrichtung vorgenommen werden.

Üblicherweise werden Ladestationen für Elektrofahrzeuge in einer sogenannten Schaltmatrix angeschlossen, um eine Belastung des elektrischen Verteilnetzes zu reduzieren. Hierzu wird eine erste Ladestation so angeschlossen, dass die erste Phase des Verteilnetzes an dem Anschluss der ersten Phase der Ladestation, die zweite Phase des Verteilnetzes an dem Anschluss der zweiten Phase der Ladestation etc. anliegt. Eine zweite oder weitere Ladestation, welche sich in der Nähe der ersten Ladestation befindet, wird dann so angeschlossen, dass die zweite Phase des Verteilnetzes an dem Anschluss der ersten Phase der Ladestation und die dritte Phase des Verteilnetzes an dem Anschluss der zweiten Phase der Ladestation anliegt. Bei der Installation jeder Ladestation ist es erforderlich, dass ein Monteur jeweils vermerkt, wie die Ladestation an das Verteilnetz angeschlossen ist und dabei die Anschlussinformationen der vorherigen Ladestation berücksichtigt. Das ist zeitaufwendig und fehlerträchtig.

Der Erfindung liegt die Aufgabe zugrunde, ein Verfahren und eine Ladeeinrichtung bereitzustellen, die die zuvor beschriebenen Nachteile vermeiden. Insbesondere soll erfindungsgemäß eine automatisierte Erkennung der Schaltmatrix von wenigstens zwei mehrpolig an ein Dreiphasen-Verteilnetz angeschlossenen elektrischen Verbrauchsmitteln, insbesondere Ladeeinrichtungen, ermöglicht werden.

Die der Erfindung zugrunde liegende Aufgabe wird gelöst durch die Bereitstellung eines Verfahrens mit den Merkmalen des Anspruchs 1 sowie durch die Bereitstellung einer Ladeeinrichtung mit den Merkmalen des Anspruchs 12.

Vorteilhafte Ausgestaltungen der Erfindung ergeben sich aus den Unteransprüchen.

Nach einem Gesichtspunkt der Erfindung wird ein Verfahren zur automatisierten Erkennung einer Schaltmatrix von wenigstens zwei mehrpolig an ein Dreiphasen-Verteilnetz angeschlossenen elektrischen Verbrauchsmitteln, insbesondere von Ladeeinrichtungen für elektrische Energiespeicher vorgeschlagen, wobei die Verbrauchsmittel jeweils eine Vielzahl von Phasenanschlüssen aufweisen, die an jeweils eine Phase des Verteilnetzes angeschlossen sind, wobei die Anschlussbelegung wenigstens eines ersten Verbrauchsmittels bekannt ist, wobei das Verfahren die Messung und/oder Überwachung eines zeitlichen Verlaufs und/oder einer Amplitude und/oder eines momentanen Wertes der Spannung an den Phasenanschlüssen wenigstens eines zweiten Verbrauchsmittels und/oder des zweiten Verbrauchsmittels umfasst und die Anschlussbelegung an wenigstens dem zweiten Verbrauchsmittel durch Abgleich der Spannungsinformationen des ersten und des zweiten Verbrauchsmittels ermittelt wird.

Unter einer Schaltmatrix im Sinne der vorliegenden Erfindung ist im Wesentlichen eine Anschlusszuordnung wenigstens eines Verbrauchsmittels, insbesondere in Form einer Ladeeinrichtung, mit mehreren Phasenanschlüssen an ein Verteilnetz mit mehreren Phasen zu verstehen. Das Verbrauchsmittel bzw. die Ladeeinrichtung kann beispielsweise ein- oder mehrphasig an einen dem elektrischen Energiespeicher vorgeschalteten Gleichrichter angeschlossen sein.

Mittels des erfindungsgemäßen Verfahrens kann beim Anschluss eines zweiten oder weiteren Verbrauchsmittels an das gleiche Verteilnetz an dem betreffenden Verbrauchsmittel automatisch zumindest teilweise die Anschlussbelegung dieses Verbrauchsmittels relativ zu der Anschlussbelegung des ersten Verbrauchsmittels erkannt werden. D. h., dass das gerade angeschlossene zweite oder weitere Verbrauchsmittel automatisch erkennt, an welchen Phasen des Verteilnetzes es angeschlossen ist, die von der ersten oder einer anderen Ladeeinrichtung belegt werden, vorausgesetzt, dass bereits ein erstes Verbrauchsmittel mit bekannter Anschlussbelegung in Betrieb genommen wurde. Dabei ist erfindungsgemäß vorgesehen, dass das bereits angeschlossene erste Verbrauchsmittel und wenigstens das zweite Verbrauchsmittel einen zeitlichen Verlauf und oder eine Amplitude und/oder einen momentanen Wert der Spannung an wenigstens einem Phasenanschluss überwachen und ein Abgleich der Spannungsinformationen der ersten und der zweiten Verbrauchsmittel untereinander erfolgt.

Bei einer bevorzugten Variante des Verfahrens gemäß der Erfindung kann vorgesehen sein, dass der Abgleich der Spannungsinformationen über eine vorzugsweise unmittelbare Datenkommunikation zwischen dem ersten und dem zweiten Verbrauchsmittel durchgeführt wird.

Der Abgleich kann derart vorgesehen sein, dass der von dem ersten Verbrauchsmittel überwachte zeitliche Verlauf der Spannung an wenigstens einem Phasenanschluss des ersten Verbrauchsmittels an das zweite Verbrauchsmittel übermittelt wird und dass der zeitliche Verlauf der Spannung an dem Phasenanschluss des ersten Verbrauchsmittels mit dem zeitlichen Verlauf der Spannung an den Phasenanschlüssen des zweiten Verbrauchsmittels verglichen wird. Aus dem Vergleich kann das zweite Verbrauchsmittel in vorteilhafter Art und Weise erkennen, welche Phasenanschlüsse des ersten Verbrauchsmittels welche Phase des Verteilnetzes belegen. Hierzu ist es beispielsweise ausreichend, wenn das erste Verbrauchsmittel den zeitlichen Verlauf der Spannung an einem ersten Phasenanschluss überwacht. Da alle Phasen des Verteilnetzes um einen vorgegebenen Phasenwinkel, üblicherweise 120°, zueinander versetzt sind, kann das zweite Verbrauchsmittel, wenn es die Information bezüglich des von dem ersten Verbrauchsmittel überbrachten Spannungsverlaufs erhält, erkennen, welcher seiner Phasenanschlüsse mit einer Phase verbunden ist, deren zeitlicher Spannungsverlauf dem von dem ersten Verbrauchsmittel gemessenen und/oder überwachten zeitlichen Spannungsverlauf entspricht.

Dabei ist es vorteilhaft, wenn das erste und das zweite Verbrauchsmittel oder alle am Verteilnetz angeschlossenen Verbrauchsmittel die gleiche Zeitbasis verwenden.
Bei einer vorteilhaften Variante der Erfindung ist deshalb vorgesehen, dass die Messung und/oder Erfassung des zeitlichen Verlaufs der Spannung an den Phasenanschlüssen des ersten und zweiten Verbrauchsmittels zeitlich miteinander synchronisiert werden, vorzugsweise unter Verwendung eines Datenprotokolls zur Zeitsynchronisation.

Die Datenkommunikation kann beispielsweise drahtgebunden über ein lokales Netzwerk, beispielsweise über Ethernet und/oder oder drahtlos über ein Mobilfunknetz durchgeführt werden.

Eine zeitliche Synchronisation kann beispielsweise mithilfe des IEEE-1588-Protokolls, das auch als Precision Time Protocol (PTP) bezeichnet wird, erfolgen.

Bei einer alternativen Variante des Verfahrens gemäß der Erfindung ist vorgesehen, dass in einem Testbetrieb oder Testmodus des ersten Verbrauchsmittels wenigstens eine Phase bzw. wenigstens ein Phasenleiter des ersten Verbrauchsmittels wenigstens zeitweise belastet wird, sodass der daraus resultierende Spannungsabfall an einer Phase des Verteilnetzes an einem Phasenanschluss des zweiten Verbrauchsmittels zwecks Erkennung der Anschlussbelegung des zweiten Verbrauchsmittels messbar ist. Diese Variante umfasst das Messen einer Amplitude und/oder eines momentanen Werts der Spannung der Phasen des Verteilnetzes an den Phasenanschlüssen des zweiten Verbrauchsmittels. Auch ohne zeitliche Synchronisation der Verbrauchsmittel kann das zweite Verbrauchsmittel auf diese Art und Weise erkennen, welche Phase des Verteilnetzes durch das erste Verbrauchsmittel belastet wird, wenn bekannt ist, welche Phasen des Verteilnetzes mit welchen Phasenanschlüssen des ersten Verbrauchsmittels belegt sind. Diese Variante des Verfahrens schließt nicht aus, dass das erste und das zweite Verbrauchsmittel bzw. alle Verbrauchsmittel oder Ladeeinrichtungen, die an das Verteilnetz angeschlossen sind, miteinander kommunizieren, sodass beispielsweise das erste Verbrauchsmittel dem zweiten Verbrauchsmittel mitteilt, wie hoch die aktuelle Amplitude der Spannung der belasteten Phase ist.

Zweckmäßigerweise wird beim Abgleich der Spannungsinformationen eine Spannungstoleranz berücksichtigt. Das ist sinnvoll und zweckmäßig, um Messtoleranzen der einzelnen elektrischen Verbrauchsmittel zu berücksichtigen. Hierzu kann beispielsweise vorgesehen sein, dass die Spannungstoleranz bei einer Überwachung des zeitlichen Verlaufs der Spannung an einem Phasenanschluss in Form einer Bandbreite und/oder einer Hüllkurve des zeitlichen Verlaufs der Spannung berücksichtigt wird. Ebenso ist es sinnvoll und im Rahmen der vorliegenden Erfindung, dass eine Messtoleranz bei der Messung von Amplitude und momentanem Wert der Spannung berücksichtigt wird.

Zweckmäßigerweise ist das Verteilnetz als Dreiphasen-Niederspannungsstromkreis mit Wechselspannung ausgebildet. Unter Niederspannung im Sinne der vorliegenden Anmeldung sind Spannungen bis 1000 V zu verstehen.

Die elektrischen Verbrauchsmittel bzw. Ladeeinrichtungen gemäß der Erfindung können beispielsweise als Ladestationen für Batteriespeicher von Elektrofahrzeugen ausgebildet sein. Das Verfahren gemäß der Erfindung ist allerdings grundsätzlich auf Ladeeinrichtungen jedweder Art, beispielsweise auf Ladeeinrichtungen für elektrische Energiespeicher in privaten Haushalten oder auf andere elektrische Verbrauchsmittel anwendbar.

Ein weiterer Gesichtspunkt der Erfindung betrifft eine Ladeeinrichtung für einen elektrischen Energiespeicher mit wenigstens drei Phasenanschlüssen an ein Dreiphasen-Verteilnetz, welches zur Durchführung des Verfahrens mit einem oder mehreren der vorstehend beschriebenen Verfahrensmerkmale ausgebildet ist.

Die Ladeeinrichtung zeichnet sich insbesondere durch Mittel zur Messung und/oder Erfassung eines zeitlichen Verlaufs und/oder einer Amplitude und/oder eines momentanen Werts der Spannung an wenigstens einem Phasenanschluss wenigstens eine Ladeeinrichtung sowie Mittel zur Kommunikation des zeitlichen Verlaufs und/oder der Amplitude und/oder eines momentanen Werts der Spannung an wenigstens eine weitere Ladeeinrichtung aus.

Die Ladeeinrichtung umfasst vorzugsweise wenigstens eine Kommunikationsschnittstelle zur Datenübertragung und/oder Datenfernübertragung an eine weitere Ladeeinrichtung.

Die Ladeeinrichtung kann wenigstens einen schaltbaren Testwiderstand zum Betrieb in einem Testmodus umfassen, der von einer an das Verteilnetz angeschlossenen weiteren Ladeeinrichtung detektierbar ist.

Die Erfindung wird nachstehend anhand zweier Ausführungsbeispiele unter Bezugnahme auf die beigefügten Zeichnungen erläutert.

Es zeigen:
- Figur 1: eine Anschlusszuordnung einer ersten, zweiten und dritten Ladestation für Elektrofahrzeuge, die mehrpolig an ein Verteilnetz angeschlossen sind,
- Figur 2: den zeitlichen Verlauf der an den Ladestationen überwachten Spannung der Phasen des Verteilnetzes, wobei Figur 2A die Überwachung an der ersten Ladestation und Figur 2B die Überwachung an der zweiten Ladestation zeigt,
- Figur 3: eine der Figur 2 entsprechende Darstellung des an den Ladestationen detektieren Spannungsverlaufs bezogen auf ein zweites Ausführungsbeispiel der Erfindung und
- Figur 4: die Darstellung eines Toleranzbereichs in Form einer oberen und unteren Hüllkurve des Spannungsverlaufs einer Phase.

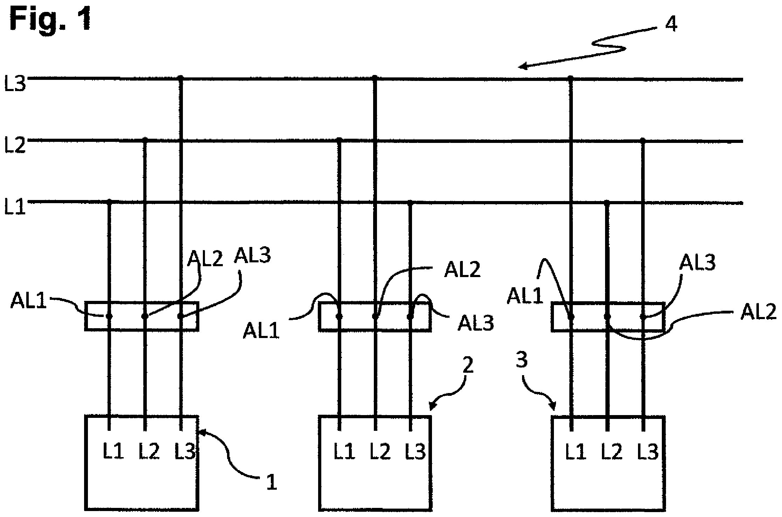

In Figur 1 ist eine Schaltmatrix eines Anschlusses einer ersten, zweiten und dritten Ladestation 1, 2, 3 an ein Verteilnetz 4 dargestellt, welches drei Wechselstrom führende Phasen L1, L2 und L3 sowie einen Nullleiter bzw. Neutralleiter aufweist. Der Neutralleiter ist aus Vereinfachungsgründen nicht dargestellt. Die Phasen L1, L2, L3 des Verteilnetzes 4 können in bekannter Art und Weise untereinander ein Potenzial von 400 V und zu dem nicht dargestellten Neutralleiter ein Potenzial von 230 V aufweisen. Die Phasenwinkel der Phasen L1, L2 und L 3 sind um 120° zueinander versetzt.

Bei dem beschriebenen Ausführungsbeispiel sind die Ladestationen 1, 2, 3 jeweils als Ladestationen für den elektrischen Speicher eines Elektrofahrzeugs ausgebildet. Die Ladestationen 1, 2, 3 sind jeweils mehrphasig mit Phasenanschlüssen AL1, AL2 und AL3 an das Verteilnetz 4 angeschlossen, wobei die Phase L1 des Verteilnetzes 4 mit dem Phasenanschluss AL1 der ersten Ladestation 1 belegt ist, die Phase L2 des Verteilnetzes 4 mit dem Phasenanschluss AL2 der ersten Ladestation 1 belegt ist und die Phase L3 des Verteilnetzes 4 mit dem Phasenanschluss AL3 der ersten Ladestation 1 belegt ist.

Die zweite Ladestation 2 ist mit ihrem Phasenanschluss AL1 an die zweite Phase L2 des Verteilnetzes 4, mit dem Phasenanschluss AL2 an die dritte Phase L3 des Verteilnetzes und mit dem Phasenanschluss AL 3 an die erste Phase L 1 des Verteilnetzes 4 angeschlossen, wohingegen die dritte Ladestation 3 mit dem Phasenanschluss AL 1 an die dritte Phase L3 des Verteilnetzes, mit dem Phasenanschluss AL2 an die erste Phase des Verteilnetzes und mit dem Phasenanschluss A3 an die zweite Phase L2 des Verteilnetzes 4 angeschlossen ist. Eine weitere Ladestation sollte dann wieder entsprechend der ersten Ladestation 1 angeschlossen sein, d. h. weitere Ladestationen sollten die Reihe entsprechend fortsetzen, um eine symmetrische Belastung des Verteilnetzes 4 bei der zeitgleichen Durchführung mehrerer Ladevorgänge zu erreichen, bei denen der elektrische Energiespeicher jeweils nur eine einphasige Energiesenke bildet.

Bei dem erfindungsgemäßen Verfahren nach dem ersten Ausführungsbeispiel ist vorgesehen, dass alle an das Verteilnetz 4 angeschlossenen Ladestationen 1, 2 und 3 den zeitlichen Verlauf der Phasen L1, L2 und L3 messen und überwachen. Weiterhin umfasst jede Ladestation 1, 2, 3 eine Datenschnittstelle und kommuniziert beispielsweise über ein 5G Mobilfunknetz oder über Ethernet mit den jeweils anderen Ladestationen. Die Anschlussbelegung der ersten Ladestation 1 ist von vornherein bekannt und festgelegt. Die Bezeichnung der Phasen L1, L2 und L3 des Verteilnetzes 4 wird durch den Anschluss der ersten Ladestation 1 festgelegt. Der an der ersten Ladestation 1 gemessene zeitliche Verlauf der Spannung an den Phasen L1, L2 und L3 des Verteilnetzes 4 wird über eine Datenkommunikation, entweder drahtgebunden oder drahtlos, an einer andere Ladestationen 2, 3 übermittelt, wobei die Spannungsinformation mit einem Zeitstempel nach einem genormten Datenprotokoll, beispielsweise nach dem IEEE-1588-Protokoll. versehen wird, sodass sichergestellt ist alle Ladestationen 1, 2, 3 die gleiche Zeitbasis verwenden. Die ersten Ladestation 1 kann unter Verwendung des Zeitstempels die von dieser überwachten Spannungsverläufe an den einzelnen Phasen L1, L2, L3 mit einer Belegungsinformation, d. h. der Zuordnung der Phasenanschlüsse AL1, AL2 und AL3 an alle weiteren Ladestationen 2, 3 übermitteln. Die zweite Ladestation 2, die ihrerseits den zeitlichen Verlauf der Spannung an ihren Phasenanschlüssen AL1, AL2 und AL3 überwacht, kann nun erkennen, an welcher Phase L1, L2, L3 sie mit welchem Phasenanschluss AL1, AL2, AL3 angeschlossen ist und ob sie beispielsweise mit dem Phasenanschluss AL1 aus der Sicht der ersten Ladestation 1 der ersten Phase L1 des Verteilnetzes 4 verbunden ist.

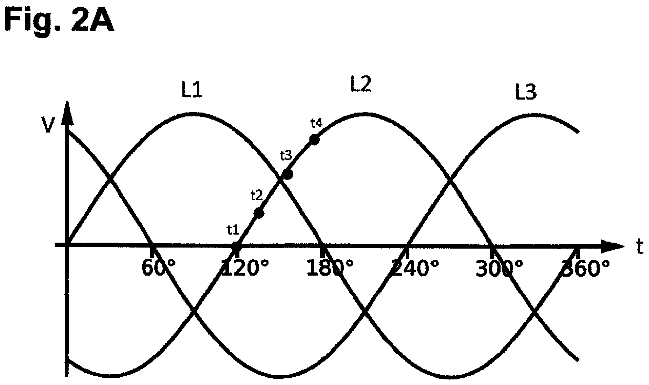

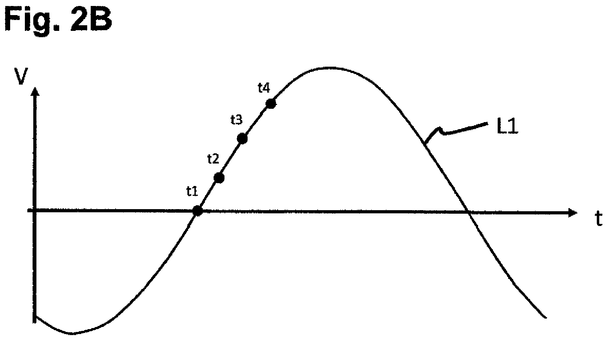

Figur 2A zeigt ein Beispiel, bei welchem bei der ersten Ladestation 1 die Spannung der zweiten Phase L2 an dem Phasenanschluss AL2 mit überwacht wird. Dieser Spannungsverlauf wird mittels der Zeitbasis bzw. eines Zeitstempels auch von der zweiten Ladestation 2 gemessen. Figur 2B zeigt den Verlauf der an der zweiten Ladestation 2 gemessenen und überwachten Spannung, die an dem Phasenanschluss AL1 der zweiten Ladestation 2 anliegt. Aufgrund der gemeinsamen Zeitbasis beider Ladestationen 1, 2 und der Kenntnis über die Anschlussbelegung der ersten Ladestation 1 erkennt die zweite Ladestation 2 den Spannungsverlauf der Phase L2 an dem ersten Phasenanschluss AL1, d. h., dass die erste Phase der zweiten Ladestation 2 bzw. der erste Phasenanschluss AL1 der zweiten Ladestation 2 an die zweite Phase L2 des Verteilnetzes 4 angeschlossen ist, die an dem zweiten Phasenanschluss AL2 der ersten Ladestation 1 anliegt.

Die Phasenbelegung der zweiten Ladestation 2 kann beispielsweise dem Monteur bei dem Anschließen der zweiten Ladestation 2 an das Verteilnetz 4 visualisiert werden, sodass die Phasenbelegung bzw. Anschlusszuordnung für den Monteur ohne weiteren Abruf von Informationen ohne weiteres erkennbar ist.

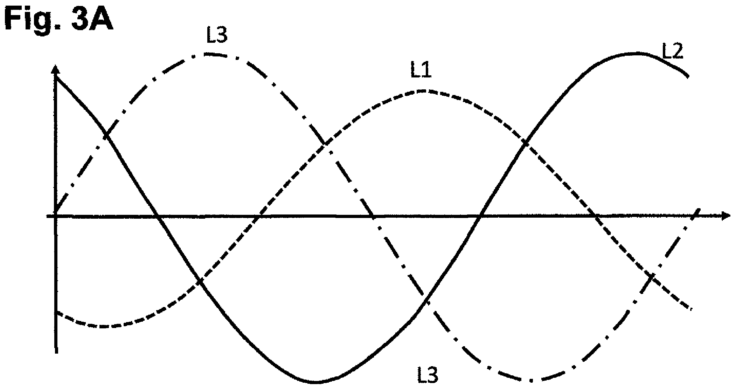

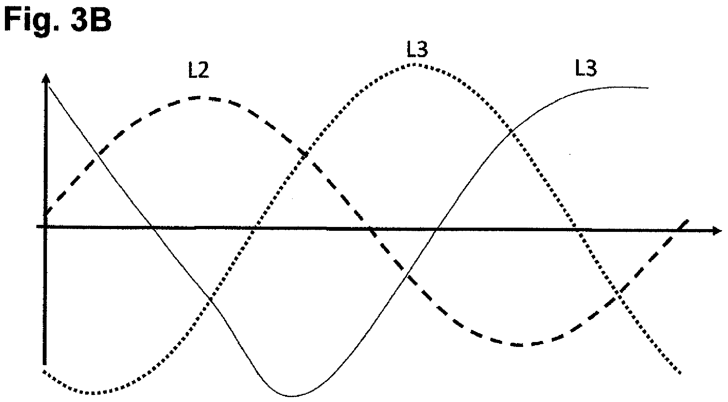

Figur 3 zeigt einen zweites Ausführungsbeispiel gemäß der Erfindung, bei welchem vorgesehen ist, dass die erste Ladestation 1 in einem Testmodus betrieben wird, in welchem eine erste Phase L1 der ersten Ladestation 1 mit einem Testwiderstand so belastet wird, dass die Amplitude der an dieser Phase L1 anliegenden Spannung reduziert ist. Die belastete Phase L1 ist hierbei die an den Phasenanschluss AL1 der ersten Ladestation 1 angeschlossene Phase. Figur 3A veranschaulicht die überwachte bzw. gemessene Spannung der Phasen L1, L2 und L3 an der ersten Ladestation, wobei erkennbar ist, dass die Phase L1 eine geringere Amplitude aufweist.

Figur 3B zeigt die entsprechenden Spannungsverläufe, die an den Phasenanschlüssen AL1 AL2 und AL3 der zweiten Ladestation 2 anliegen. Aus Sicht der zweiten Ladestation 2 ist die Amplitude der an dem Phasenanschluss AL2 der zweiten Ladestation 2 anliegenden Spannung reduziert. Bei einer bestimmten und bekannten Belegung der Phasenanschlüsse AL1, AL2 und AL2 der ersten Ladestation 1 kann die zweite Ladestation 2 erkennen, dass der Phasenanschluss AL2 an die Phase L1 angeschlossen ist, die mit dem Phasenanschluss AL1 der ersten Ladestation 1 belegt ist. Diese Variante des Verfahrens kann auch ohne eine ständige Datenkommunikation zwischen den Ladestationen 1, 2, 3 durchgeführt werden. Dies schließt aber nicht aus, dass alle Ladestationen 1, 2, 3 in einer Datenverbindung miteinander stehen.

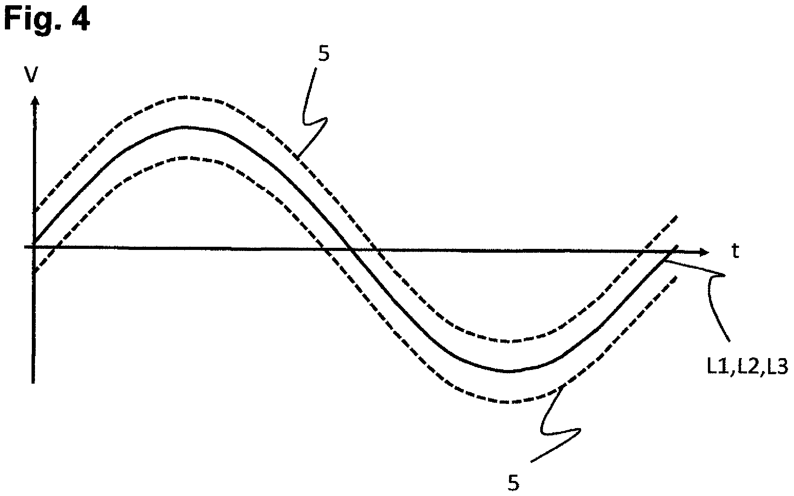

Figur 4 zeigt den Toleranzbereich, der bei dem Verfahren gemäß der Erfindung zur Ermittlung der Phasenbelegung beispielsweise der ersten Ladestation 1 an der zweiten Ladestation 2 verwendet werden kann. Wird beispielsweise an der ersten Ladestation 1 eine Spannung an einer Phase L1, L2, L3 in Höhe von 100 V gemessen, so kann es aufgrund von Bauteiltoleranzen sein, dass die zweite Ladestation eine Spannung in Höhe von 102 V Mist. Um diese Messungenauigkeiten zu berücksichtigen, kann eine obere und untere Hüllkurve 5 bei der Ermittlung der jeweiligen Phase (L1, L2, L3) verwendet werden, wobei die obere und untere Hüllkurve 5 des Spannungsverlaufs einer Phase (L1, L2, L3), wie sie in Figur 4 eingezeichnet ist, diesen Toleranzbereich abbildet.

### Bezugszeichenliste

- 1: erste Ladestation
- 2: zweite Ladestation
- 3: dritte Ladestation
- 4: Verteilnetz
- 5: Hüllkurve
- L1: erste Phase
- L2: zweite Phase
- L3: dritte Phase
- AL1: erster Phasenanschluss
- AL2: zweiter Phasenanschluss
- AL3: dritter Phasenanschluss

## Patentansprüche

1. Verfahren zur automatisierten Erkennung einer Schaltmatrix von wenigstens zwei mehrpolig an ein Dreiphasen-Verteiinetz (4) angeschlossenen elektrischen Verbrauchsmitteln, insbesondere von an das Dreiphasen-Verteilnetz (4) Ladeeinrichtungen (1,2,3) für elektrische Energiespeicher, wobei die Verbrauchsmittel jeweils eine Vielzahl von Phasenanschlüssen (AL1 ,AL2,AL3) aufweisen, die an jeweils eine Phase (L1,L2,L3) des Verteilnetzes (4) angeschlossen sind, wobei die Anschlussbelegung wenigstens eines ersten Verbrauchsmittels bekannt ist, wobei das Verfahren die Messung und/oder Überwachung eines zeitlichen Verlaufs und/oder einer Amplitude und/oder eines momentanen Wertes der Spannung an den Phasenanschlüssen wenigstens eines zweiten Verbrauchsmittels und/oder des ersten Verbrauchsmittels umfasst und die Anschlussbelegung an wenigstens dem zweiten Verbrauchsmittel durch Abgleich von Spannungsinformationen des ersten und des zweiten Verbrauchsmittels ermittelt wird.

2. Verfahren nach Anspruch 1, **dadurch gekennzeichnet, dass** der Abgleich der Spannungsinformationen über eine vorzugsweise unmittelbare Datenkommunikation zwischen dem ersten und dem zweiten Verbrauchsmittel durchgeführt wird.

3. Verfahren nach einem der Ansprüche 1 oder 2, **dadurch gekennzeichnet, dass** der von dem ersten Verbrauchsmittel überwachte zeitliche Verlauf der Spannung an wenigstens einem Phasenanschluss (AL1 ,AL2, AL3) an das zweite Verbrauchsmittel übermittelt wird und dass der zeitliche Verlauf der Spannung an dem Phasenanschluss des ersten Verbrauchsmittels mit dem zeitlichen Verlauf der Spannung an den Phasenanschlüssen des zweiten Verbrauchsmittels zur Erkennung der Anschlussbelegung an dem zweiten Verbrauchsmittel verglichen wird.

4. Verfahren nach einem der Ansprüche 1 bis 3, **dadurch gekennzeichnet, dass** die Messung und/ oder Erfassung des zeitlichen Verlaufs der Spannung an den Phasenanschlüssen des ersten und zweiten Verbrauchsmittels zeitlich miteinander synchronisiert werden, vorzugsweise unter Verwendung eines Datenprotokolls zur Zeitsynchronisation.

5. Verfahren nach einem der Ansprüche 2 bis 4, **dadurch gekennzeichnet, dass** die Datenkommunikation drahtgebunden über Ethernet und/oder drahtlos über ein Mobilfunknetz durchgeführt wird.

6. Verfahren nach einem der Ansprüche 4 oder 5, **dadurch gekennzeichnet, dass** für die Zeitsynchronisation als Datenprotokoll ein PTP (Precision Time Protocol) oder NTP (Network Time Protocol) verwendet wird.

7. Verfahren nach Anspruch 1, **dadurch gekennzeichnet, dass** in einem Testmodus des ersten Verbrauchsmittels wenigstens eine Phase (L1,L2,L3) des ersten Verbrauchsmittels wenigstens zeitweilig belastet wird und dass der daraus resultierende Spannungsabfall an einer Phase (L1,L2,L3) des Verteilnetzes (4) an einem Phasenanschluss (AL1 ,AL2,AL3) des zweiten Verbrauchsmittels zwecks Erkennung der Anschlussbelegung des zweiten Verbrauchsmittels gemessen wird.

8. Verfahren nach einem der Ansprüche 1 bis 7, **dadurch gekennzeichnet, dass** beim Abgleichen der Spannungsinformationen eine Spannungstoleranz berücksichtigt wird.

9. Verfahren nach Anspruch 8, **dadurch gekennzeichnet, dass** die Spannungstoleranz bei einer Überwachung des zeitlichen Verlaufs der Spannung an einem Phasenanschluss (AL1, AL2, AL3) in Form einer Bandbreite und/oder oder Hüllkurve (5) des zeitlichen Verlaufs der Spannung berücksichtigt wird.

10. Verfahren nach einem der Ansprüche 1 bis 9, **dadurch gekennzeichnet, dass** das Verteilnetz (4) als Dreiphasen-Niederspannungsstromkreis mit Wechselspannung ausgebildet ist.

11. Verfahren nach einem der Ansprüche 1 bis 10, **dadurch gekennzeichnet, dass** die Verbrauchsmittel als Ladestationen (1,2,3) für Batteriespeicher von Elektrofahrzeugen ausgebildet sind.

12. Ladeeinrichtung (1,2,3) für einen elektrischen Energiespeicher mit wenigstens drei Phasenanschlüssen (AL1, AL2, AL3) an ein Dreiphasen-Verteilnetz (4) welche zur Durchführung des Verfahrens nach einem der Ansprüche 1 bis 11 ausgebildet ist.

13. Ladeeinrichtung (1,2,3) nach Anspruch 12, **gekennzeichnet durch** Mittel zur Messung und/oder Erfassung eines zeitlichen Verlaufs und/oder einer Amplitude und/oder eines momentanen Werts der Spannung an wenigstens einem Phasenanschluss (AL1, AL2, AL3) wenigstens einer Ladeeinrichtung (1,2,3) und durch Mittel zur Kommunikation des zeitlichen Verlaufs und/oder der Amplitude und/oder eines momentanen Werts der Spannung an eine weitere Ladeeinrichtung (1,2,3).

14. Ladeeinrichtung (1,2,3) nach einem der Ansprüche 12 oder 13, **gekennzeichnet durch** wenigstens eine Kommunikationsschnittstelle zur Datenübertragung und/oder Datenfernübertragung an eine weitere Ladeeinrichtung (1,2,3).

15. Ladeeinrichtung (1,2,3) nach einem der Ansprüche 12 bis 14, **gekennzeichnet durch** wenigstens einen schaltbaren Testwiderstand zum Betrieb der Ladeeinrichtung (1,2,3 in einem Testmodus, der von einer an das Verteilnetz (4) angeschlossenen weiteren Ladeeinrichtung (1,2,3) detektierbar ist.
